# EUROPEAN PATENT SPECIFICATION

(11) **EP 2 517 926 B1**
(45) Date of publication and mention of the grant of the patent: **20.01.2021**
(21) Application number: 10839245.7
(22) Date of filing: 14.12.2010
(51) Int. Cl.: A47C 7/62, B60N 2/00, B60N 2/70

(54) **STRUCTURE AND METHOD FOR ATTACHING LOAD DETECTING DEVICE AND SHEET DEVICE**
STRUKTUR UND VERFAHREN ZUR BEFESTIGUNG EINER LASTENERKENNUNGSVORRICHTUNG UND FOLIENVORRICHTUNG DAFÜR
STRUCTURE ET PROCÉDÉ DE FIXATION D'UN DISPOSITIF DÉTECTEUR DE CHARGE ET DISPOSITIF À NAPPE

(30) Priority: 21.12.2009 JP 2009288660; 26.04.2010 JP 2010100912
(43) Date of publication of application: 31.10.2012
(73) Proprietor: Aisin Seiki Kabushiki Kaisha, Aichi 448-8650 (JP)
(72) Inventor: YANAI, Keiichi, Kariya-shi Aichi 448-8650 (JP); MAETA, Kenji, Kariya-shi Aichi 448-8650 (JP); TAKUMA, Setsu, Kariya-shi Aichi 448-8650 (JP); KAWAJIRI, Naoka, Kariya-shi Aichi 448-0027 (JP)
(74) Representative: Cabinet Beau de Loménie
(86) International application number: PCT/JP2010/072470
(87) International publication number: WO 2011/078012

(56) References cited:
- FR-A1- 2 870 488
- FR-A1- 2 870 488
- FR-A1- 2 870 798
- JP-A- 2002 211 297
- JP-A- 2003 291 708
- JP-B2- 3 781 957

## Description

### TECHNICAL FIELD

Present invention relates to a load detection device mounting structure and method.

### BACKGROUND OF THE TECHNOLOGY

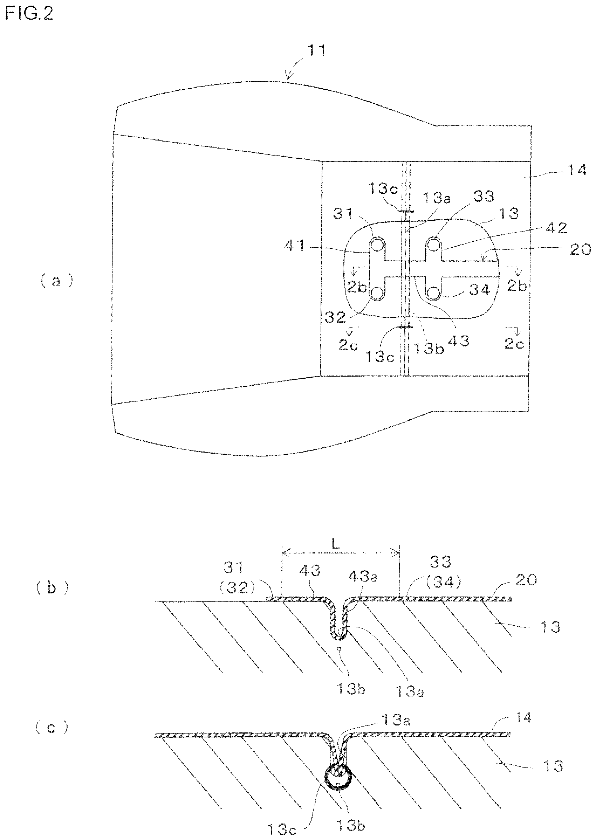

A one type of a load detection device mounting structure is known, which is described in Patent Document 1. As shown in Fig. 2, 3, 4 and 10 of Patent Document 1, regarding the load detection device mounting structure, when a seating sensor 11 is mounted on a surface of a pad member 3, a sensing portion 11a (detecting portion) of the seating sensor 11 (load detection device) is disposed on a rear side (right side in Fig. 2) of a groove portion 5 and a connecting portion 11c (conducting portion) is disposed on an inclined portion (recessed portion) 10.

### THE DOCUMENT OF CONVENTIONAL TECHNOLOGY

### PATENT DOCUMENT

Patent Document 1:JP2002-65396 A Publication

FR2870798 discloses a motor vehicle seat, having flexible layer with two sides placed in respective baize pockets for being maintained against the seat cushion surface, wherein one pocket allows sliding of one side at its interior, parallel to surface

### DISCLOSURE OF THE INVENTION

### PROBLEMS TO BE SOLVED BY THE INVENTION

According to a load detection device mounting structure described in Patent Document 1, such a condition can be prevented that the connecting portion 11c of the seating sensor is bent at a sharp angle by disposing the portion (connecting portion) 11c of the seating sensor at the inclined portion 10. However, since the detecting portions are not disposed on both sides of the inclined portion 10, it is impossible to adjust a pitch distance between the detecting portions by utilizing the inclined portion 10.

The present invention is made to solve the above-mentioned problems and it is an object of the present invention that in the load detection device mounting structure, the pitch distance between the detecting portions is adjustable by utilizing the inclined portion so as to accelerate the common use of the load detection device, which can lead to a cost reduction.

### MEANS FOR SOLVING THE PROBLEMS

The invention associated with claim 1 for solving the above problems is a mounting structure of mounting a load detection device to a cushion member of a seat cushion of a vehicle seat, wherein the load detection device comprises a plurality of detecting portions for detecting load information and one or more connecting portions for connecting the detecting portions, the cushion member includes a plurality of detecting portion disposing portions for disposing the detecting portions, respectively, one or more connecting portion disposing portions for disposing the one or more connecting portions, respectively, and a recessed portion formed in at least one of the connecting portion disposing portions, both sides of the recessed portion being arranged with the detecting portion disposing portions and the recessed portion is a groove formed as a decorative groove of the seat cushion or a suspending groove for suspending a surface skin member of the seat cushion. The load detection device is mounted on the cushion member in such a manner that the respective detecting portions are disposed on the respective detecting portion disposing portions, the one or more connecting portions are disposed on the connecting portion disposing portions and the connecting portion crossing over the recessed portion is disposed in the recessed portion.

Further, the invention associated with Claim 2 is that in Claim 1, the length of the connecting portion disposed along the inner surface of the recessed portion is so determined that the pitch distance between the two detecting portions disposed on both sides of the recessed portion becomes a predetermined value when the connecting portion is disposed along the inner surface of the recessed portion.

Further, the invention associated with Claim 3 is that in Claim 1 or Claim 2, only the back surface of the connecting portions is adhered to the recessed portion by means of the double-sided adhesive tape.

Further, the invention associated with Claim 4 is a method for mounting a load detection device comprising a plurality of detecting portions for detecting load information and one or more connecting portions for connecting the detecting portions, to a cushion member of a seat cushion of a vehicle seat, which includes a plurality of detecting portion disposing portions for disposing the detecting portions, respectively, one or more connecting portion disposing portions for disposing the one or more connecting portions, respectively, and a recessed portion formed in at least one of the connecting portion disposing portions, both sides of the recessed portion being arranged with the detecting portion disposing portions, and being a groove formed as a decorative groove of the seat cushion or a suspending groove for suspending a surface skin member of the seat cushion, wherein in a process for disposing the one or more connecting portions on the connecting portion disposing portions, the connecting portion crossing over the recessed portion is disposed in the recessed portion when the connecting portion is disposed on the connecting portion disposing portion provided with the recessed portion.

Further, the invention associated with Claim 5 is that in Claim 4, only the back surface of the connecting portions is adhered to the recessed portion by means of the double-sided adhesive tape.

### THE EFFECTS OF THE INVENTION

In the above-mentioned structure of the invention of claim 1, the load detection device comprises a plurality of detecting portions for detecting load information and one or more connecting portions for connecting the detecting portions. The cushion member includes a plurality of detecting portion disposing portions for disposing the detecting portions, respectively, one or more connecting portion disposing portions for disposing the one or more connecting portions, respectively, and a recessed portion formed in at least one of the connecting portion disposing portions, both sides of the recessed portion being arranged with the detecting portion disposing portions. And the load detection device is mounted on the cushion member in such a manner that the respective detecting portions are disposed on the respective detecting portion disposing portions, the one or more connecting portions are disposed on the connecting portion disposing portions and the connecting portion crossing over the recessed portion is disposed in the recessed portion. Accordingly, since the detecting portions are disposed on both sides of the recessed portion formed in the cushion member, that is, the recessed portion is disposed between the detecting portions, a pitch distance between the detecting portions can be adjusted by utilizing the recessed portion, that is, by disposing the connecting portion in the recessed portion. Therefore, if one kind of load detection device which is comparatively large in size (the pitch distance between the detecting portions being long) is prepared, the load detection device can be adaptable to a plurality of kinds of seat apparatuses (cushion members) by adjusting the pitch distance between the detecting portions as mentioned before. Thereby, the common use of the load detection device can be accelerated, which can lead to a cost reduction.

Further, the recessed portion is a groove formed as a decorative groove of the seat cushion or a suspending groove for suspending a surface skin member of the seat cushion. Accordingly, since a groove which has been formed in the cushion member can be utilized as the recessed portion, the pitch distance between the detecting portions can be adjusted without providing a special-purpose recessed portion for adjusting the pitch distance between the detecting portions separately, that is to say, without leading to a cost increase.

According to the above-mentioned structure of the invention of claim 2, in Claim 1, the length of the connecting portion disposed along the inner surface of the recessed portion is so determined that the pitch distance between the two detecting portions disposed on both sides of the recessed portion becomes a predetermined value when the connecting portion is disposed along the inner surface of the recessed portion. Therefore, the detecting portions can be exactly disposed on the predetermined disposing location because the pitch distance between the detecting portions disposed on both sides of the recessed portion becomes a predetermined value when the load detection device is mounted on the cushion member.

According to the above-mentioned structure of the invention of Claim 3, in Claim 1 or Claim 2, since only the back surface of the connecting portions is adhered to the recessed portion by means of the double-sided adhesive tape, the connecting portions can be surely adhered to the recessed portion by means of the adhesive of the double-sided adhesive tape. At the same time, the detection sensitivity of the detecting portions can be assured and any uncomfortable seating feeling can be suppressed.

According to the above-mentioned structure of the invention of claim 4, in the process wherein one or more connecting portions are disposed on the connecting portion disposing portions, the connecting portion crossing over the recessed portion is disposed in the recessed portion when the connecting portion is disposed on the connecting portion disposing portion formed with the recessed portion. Accordingly, since the detecting portions are disposed on both sides of the recessed portion formed in the cushion member, that is to say, the detecting portions are disposed putting the recessed portion therebetween, a pitch distance between the detecting portions can be adjusted by utilizing the recessed portion, that is, by disposing the connecting portion in the recessed portion. Therefore, if one kind of load detection device which is comparatively large in size (the pitch distance between the detecting portions being long) is prepared, the load detection device can be adaptable to a plurality of kinds of seat apparatuses (cushion members) by adjusting pitch distance between the detecting portions as mentioned before. Thereby, the common use of the load detection device can be accelerated, which can lead to a cost reduction.

Further, the recessed portion is a groove formed as a decorative groove of the seat cushion or a suspending groove for suspending a surface skin member of the seat cushion. Accordingly, since a groove which has been formed in the cushion member can be utilized as the recessed portion, the pitch distance between the detecting portions can be adjusted without providing a special-purpose recessed portion for adjusting the pitch distance between the detecting portions separately, that is to say, without leading to a cost increase.

According to the above-mentioned structure of the invention of Claim 5, in Claim 4, since only the back surface of the connecting portions is adhered to the recessed portion by means of the double-sided adhesive tape, the connecting portions can be surely adhered to the recessed portion by means of the adhesive of the double-sided adhesive tape. At the same time, the detection sensitivity of the detecting portions can be assured and any uncomfortable seating feeling can be suppressed.

### BRIEF EXPLANATION OF ATTACHED DRAWINGS

[Fig. 1] is a perspective view of an overall vehicle seat structure, to which the first embodiment of the load detection device mounting structure according to the invention is adapted;
[Fig. 2] is a partially broken upper side view (a) showing a cushion member of a vehicle seat, a partially enlarged cross sectional view (b) taken along the line 2b-2b and a partially enlarged cross sectional view (c) taken along the line 2c-2c;
[Fig. 3] is a partially enlarged upper side view of the cushion member of the vehicle seat shown in Fig.1;
[Fig. 4] shows an upper side view (a) of the load detection device and a lower side view (b) of the load detection device;
[Fig. 5] is a partially broken upper side view (a) of the cushion member of the vehicle seat, to which the second embodiment of the load detection device mounting structure according to the invention is adapted, a partially enlarged upper side view (b) of the cushion member and a partially enlarged cross sectional view (c) taken along the line 5c-5c;
[Fig. 6] is a upper side view (a) of the cushion member of the vehicle seat, to which the third embodiment of the load detection device mounting structure according to the invention is adapted and a lower side view (b) of the load detection mounting structure;
[Fig. 7] is a partially enlarged cross sectional view of the cushion member of the vehicle seat, to which the forth embodiment of the load detection device mounting structure according to the invention is adapted.

### THE EMBODIMENTS OF THE INVENTION

### 1) FIRST EMBODIMENT

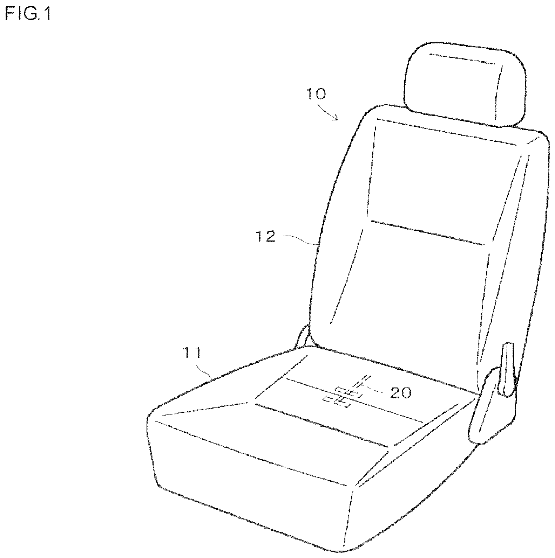

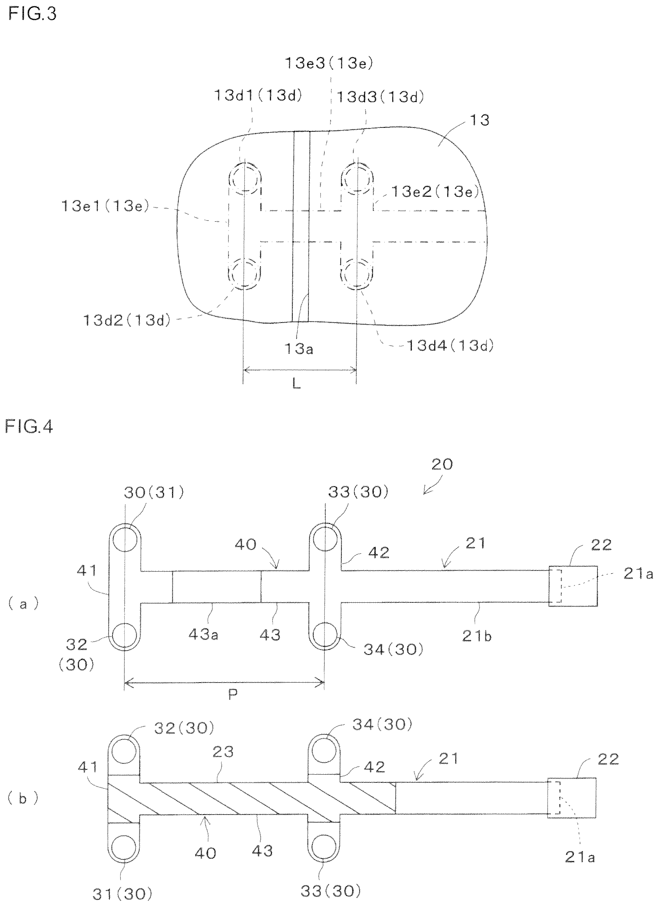

The first embodiment of a load detection device mounting structure adapted to a vehicle seat will be explained with reference to the attached drawings. Fig. 1 is a perspective view of an overall structure of the vehicle seat 10, Fig. 2 (a) is a partially broken upper side view showing a seat cushion 11 (seating portion) of a vehicle seat 10, Fig. 2 (b) is a partially enlarged cross sectional view taken along the line 2b-2b, Fig. 2 (c) is a partially enlarged cross sectional view taken along the line 2c-2c, Fig. 3 is a partially enlarged upper side view of a cushion member 13, Fig. 4 (a) is an upper side view of the load detection device 20 and Fig. 4 (b) is a lower side view of the load detection device 20.

The vehicle seat 10 is provided with the seat cushion 11, a seat back 12 and the load detection device 20 as shown in Fig. 1. The vehicle seat 10 has the seat cushion 11, the seat back 12 and the load detection device 20. As shown in Fig. 1, the seat cushion 11 has the cushion member 13 formed by urethane or the like and a surface skin member 14 made of cloth (or vinyl leather or leather etc.) covering the surface (upper surface) of the cushion member 13.

As shown in Fig. 2, a recessed groove 13a is formed extending in the right/left direction (upper/lower direction as viewed in Fig. 3). In a lower side of the recessed groove 13a within the cushion member 13, a hook member 13b is buried, which is formed by a metal wire material and extends approximately to full extent of the recessed groove 13a in width direction. The hook members 13b fix the surface skin member 14 by means of fixing members 13c. The recessed portion 13a is a suspending groove formed to suspend the surface skin member 14.

The cushion member 13 has a plurality of detecting portion disposing portions 13d, the surface of which the respective detecting portions 30 are disposed on and one or more connecting portion disposing portions 13e on which one or more connecting portions are respectively disposed.

The detecting portion disposing portions 13d consist of a first detecting portion disposing portion 13d1 for disposing a first detecting portion 31, a second detecting portion disposing portion 13d2 for disposing a second detecting portion 32, a third detecting portion disposing portion 13d3 for disposing a third detecting portion 33, a forth detecting portion disposing portion 13d4 for disposing a forth detecting portion 34.

The connecting portion disposing portions 13e comprise a first connecting portion disposing portion 13e1 for disposing a first connecting portion 41, a second connecting portion disposing portion 13e2 for disposing a second connecting portion 42 and a third connecting portion disposing portion 13e3 for disposing a third connecting portion 43.

A groove portion 13a is formed in at least one of the first through third connecting portion disposing portions 13e1, 13e2, 13e3 (in this embodiment, in the third connecting portion disposing portion 13e3). There are disposed the first detecting portion disposing portion 13d1 and (/or) the second detecting portion disposing portion 13d2 and the third detecting portion disposing portion 13d3 and (/or) the forth detecting portion disposing portion 13d4 on both sides of the groove portion 13a (the both sides putting the groove portion 13a therebetween). It is noted that the both sides of the groove portion 13a means the both sides in a direction of the adjustable pitch distance between the detecting portions 30 (for instance, the first detecting portion 31 and the third detecting portion 33).

It is noted that the groove portion 13a can be utilized as the recessed portion as it is, but a wider recessed portion can be formed by additionally machining the groove portion 13a.

The load detection device 20 is disposed between the cushion member 13 and the surface skin member 14. The load detection device 20, as shown in Fig. 4, is provided with a film-shaped (sheet-shaped) membrane switch 21 and connector 22. The membrane switch 21 has the detecting portions 30, the connecting portions and an output portion 21a.

The detecting portion 30 is disposed on the cushion member 13 to detect load information applied on the cushion member 13. The detecting portion 30 comprises an upper film, an upper surface of which contacts with a lower surface of the surface skin member 14, a lower film whose lower surface contacts with the upper surface of the cushion member 13 and on an upper surface of which contacts are provided with at mid portion thereof, and an insulating spacer interposed between the upper film and the lower film along the outer periphery thereof. Thus, in this embodiment, the load information does not indicate absolute load values but indicate one state where a load smaller than a predetermined value is applied as the off state (the both contacts being in separate state) and another state where a load larger than the predetermined value is applied as the on state (the both contacts being in connected state)

In this embodiment, there are provided with a plurality of (four) detecting portions 30. The detecting portions 30 consist of a first through forth detecting portions 31 through 34.

The connecting portion 40 is provided for connecting the detecting portions 31 through 34. It is preferable that one or more connecting portions 40 are provided. In this embodiment, the connecting portions 40 consist of a first connecting portion 41 which connects the first detecting portion 31 and the second connecting portion 32, a second connecting portion 42 which connects the third detecting portion 33 and the forth detecting portion 34 and a third connecting portion 43 which connects the first connecting portion 41 and the second connecting portion 42. The third connecting portion 43 connects the first detecting portion 31 and/or the second detecting portion 32 and the third detecting portion 33 and/ or forth detecting portion 34. The third connecting portion 43 has a portion 43a which is disposed in (stuck to) the groove portion 13a (recessed portion)

The output portion 21a is provided for outputting the load information detected by the detecting portions 30. That is, the output portion 21a is formed with output electrodes. The connector 22 is connected with the output portion 21a. The output portion 21a is connected with a connecting portion 21b which is connected with the second connecting portion 42.

Further, as shown in Fig. 4 (b), a double-sided adhesive tape 23 (indicated with the hatched lines) is stuck to the back surface of the membrane switch 21. The double-sided adhesive tape 23 is not stuck to the back surface of the detecting portions 30, but is mainly stuck to the back surface of the connecting portions 40. Accordingly, the connecting portions 40 can be surely adhered to the groove portion 13a (recessed portion) by means of the adhesive of the double-sided adhesive tape 23. At the same time, the detection sensitivity of the detecting portions 30 can be assured and any uncomfortable seating feeling can be suppressed.

The load detection device 20 is adhered and fixed to the upper surface of the cushion member 13 at a predetermined location. That is, the first through forth detecting portions 31 through 34 are respectively disposed on the first through forth detecting portion disposing portions 13d1 through 13d4. The first through third connecting portions 41 through 43 are respectively disposed on the first through third connecting portion disposing portions 13e1 through 13e3. The third connecting portion 43 crossing over the groove portion 13a (recessed portion) is disposed in the groove portion 13a. In detail, as shown in Fig. 2 (b), the portion 43a of the third connecting portion 43 is adhered to the inner surface of the groove portion 13a in the groove portion 13a.

Further, the length of the third connecting portion 43 along the inner surface of the groove portion 13a is so determined that the pitch distance (after being fixed) between the two detecting portions disposed on both sides of the groove portion 13a (in this embodiment, between the first detecting portion 31 and the third detecting portion 33 (or the forth detecting portion 34), or between the second detecting portion 32 and the forth detecting portion 34 (or the third detecting portion 33)) may be the predetermined value L when the third connecting portion 43 is fixed to the inner surface of the groove portion 13a. When the membrane switch 21 is in a plane plate state before being bent (refer to Fig. 4 (a)), a pitch distance (before being fixed) between the two detecting portions (in this embodiment, between the first detecting portion 31 and the third detecting portion 33 (or the forth detecting portion 34), or between the second detecting portion 32 and the forth detecting portion 34 (or the third detecting portion 33)) disposed on both sides of the potion 43a is a length P. This length P is determined to be longer than the predetermined value L. The predetermined value L is so determined that the pitch distance enable the load applied on the cushion member 13 to be properly detected.

Next, a mounting method for mounting the load detection device 20 on the cushion member 13 will be explained hereinafter. Anyone of the detecting portions 30 is positioned at the corresponding connecting portion disposing portion. The connecting portion 40 which is connected to this detecting portion 30 is stuck to the corresponding connecting portion disposing portion from this detecting portion side as a base point. The connecting portion 40 crossing over the groove portion 13a is disposed in the groove portion 13a when the connecting portion 40 (in this embodiment, the third connecting portion) is disposed on the connecting portion disposing portion 13e (in this embodiment, the third connecting portion disposing portion 13e3) in which the groove portion 13a is formed.

In detail, the first detecting portion 31 (or the second detecting portion 32) is positioned at the first detecting portion disposing portion 13d1 (or the second detecting disposing portion 13d2). The first connecting portion 41 which is connected to the first detecting portion 31 is stuck to the connecting portion disposing portion 13e1 from the first detecting portion 31 side (or the second detecting portion 32 side) as a base point. Then, the third connecting portion 43 and the second connecting portion 42 are stuck to the corresponding third connecting portion disposing portion 13e3 and the second connecting portion disposing portion 13e2 in order.

The portion 43a of the third connecting portion 43 crossing over the groove portion 13a is stuck to the inner surface of the groove portion 13a when the third connecting portion 43 is stuck to the third connecting portion disposing portion 13e3 in which the groove portion 13a is formed.

The pitch distance between the two detecting portions P before the sticking is longer than the predetermined value L of the pitch distance between the two detecting portions after the sticking. Therefore, the predetermined value L can be made shorter than the pitch distance P by disposing the connecting portion between the detecting portions in the groove portion formed between the detecting portions so that the connecting portion can be stuck in such a manner that the pitch distance becomes the predetermined value L of the pitch distance between the two detecting portions shorter than the pitch distance P.

As clear from the explanation above, in the embodiment of the load detection device mounting structure, the load detection device 20 comprises a plurality of detecting portions 30 for detecting load information and one or more connecting portions 40 for connecting the detecting portions 30. The cushion member 13 comprises a plurality of detecting portion disposing portions 13d for disposing the detecting portions 30, respectively, one or more connecting portion disposing portions 13e for disposing the one ore more connecting portions 40, respectively, and the groove portion 13a (recessed portion) formed in at least one of the connecting portion disposing portions 13e, both sides of the groove portion 13a being arranged with the detecting portion disposing portions 13d1 and 13d3. And the load detection device 20 is mounted on the cushion member 13 in such a manner that the respective detecting portions 30 are disposed on the respective detecting portion disposing portions 13d, the more than one connecting portions 40 are respectively disposed on the connecting portion disposing portions 13e and the third connecting portion 43 crossing over the groove portion 13a is disposed in the groove portion 13a. Accordingly, the detecting portions 31 and 33 (or 32 and 34) are disposed on both sides of the groove portion 13a formed in the cushion member 13, that is, the groove portion 13a is put between the detecting portions 31 and 33. Thereby, the pitch distance between the detecting portions 31 and 33 can be adjusted by utilizing the groove portion 13a, that is, by disposing the third connecting portion 43 in the groove portion 13a. Therefore, if one kind of load detection device 20 which is comparatively large in size (the pitch distance between the detecting portions being long) is prepared, the load detection device 20 can be adaptable to a plurality of kinds of seat apparatuses (cushion members) by adjusting the pitch distance between the detecting portions as mentioned before. Thereby, the common use of the load detection device 20 can be accelerated, which can lead to a cost reduction.

It is preferable that the groove portion 13a (recessed portion) is the suspending groove for suspending the surface skin member 14 of the seat cushion 11. The groove portion 13a may be provided by utilizing a groove (recessed portion) other than the suspending groove, which is already formed in the cushion member 13 such as a groove formed as a decorative groove of the seat cushion. Accordingly, since the groove which is already formed in the cushion member 13 can be utilized as the recessed portion, the pitch distance between the detecting portions can be adjusted without providing a special-purpose recessed portion for adjusting the pitch distance between the detecting portions separately, that is to say, without leading to a cost increase.

Further, the length of the connecting portion disposed along the inner surface of the groove portion 13a (recessed portion) is so determined that the pitch distance between the two detecting portions 31 and 33 (or 32 and 34) disposed on both sides of the groove portion 13a (recessed portion) becomes a predetermined value L when the third connecting portion 43 is disposed along the inner surface of the groove portion 13a (recessed portion). Therefore, the detecting portions 40 can be exactly disposed on the predetermined disposing location because the pitch distance between the two detecting portions 31 and 33 (or 32 and 34) disposed on both sides of the groove portion 13a (recessed portion) becomes a predetermined value L when the load detection device 20 is mounted on the cushion member 13.

Further, the cushion member 13 (seat cushion 11) can be provided having the load detection device mounting structure corresponding to the embodiment which can afford the above-mentioned effect.

Further, the vehicle seat 10 (seat apparatus) can be provided having the load detection device mounting structure corresponding to the embodiment which can afford the above-mentioned effect.

Further, in the process where one or more connecting portions 40 are disposed on the connecting portion disposing portions 13e, respectively, the third connecting portion 43 crossing over the groove portion 13a (recessed portion) is disposed in the groove portion 13a (recessed portion) when the third connecting portion 43 is disposed on the third connecting portion disposing portion 13e formed with the groove portion 13a (recessed portion). Accordingly, the detecting portions 31 and 33 (or 32 and 34) are disposed on both sides of the groove portion 13a (recessed portion) formed in the cushion member13, that is, the detecting portions 31 and 33 (or 32 and 34) are disposed putting the groove portion 13a (recessed portion) therebetween. Thereby, the pitch distance between the detecting portions 31 and 33 (or 32 and 34) can be adjusted by utilizing the groove portion 13a (recessed portion), that is, by disposing the third connecting portion 43 in the groove portion 13a (recessed portion). Therefore, if one kind of load detection device which is comparatively large in size (the pitch distance between the detecting portions being long) is prepared, the load detection device can be adaptable to a plurality of kinds of seat apparatuses (cushion members) by adjusting pitch distance between the detecting portions as mentioned before. Thereby, the common use of the load detection device can be accelerated, which can lead to a cost reduction.

### 2) SECOND EMBODIMENT

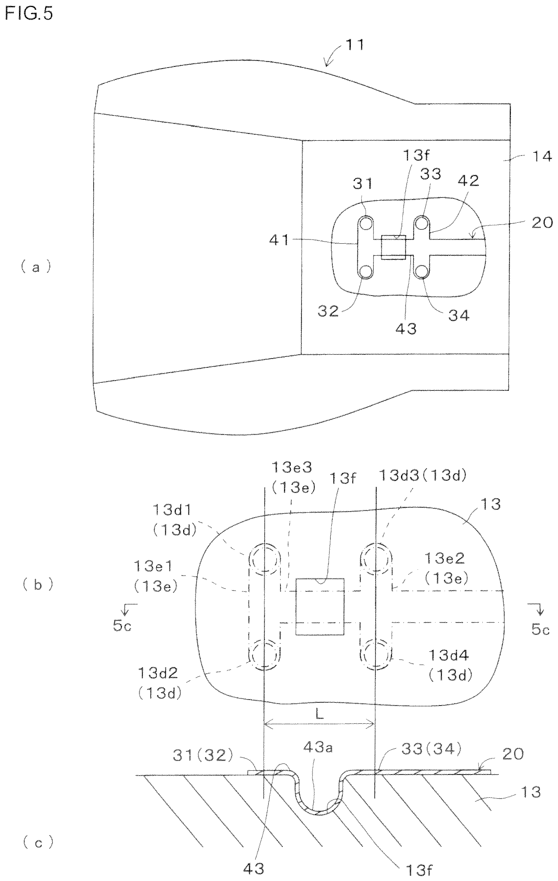

Hereinafter, a second embodiment will be explained with reference to Fig. 5. In the first embodiment, the groove portion 13a is utilized (commonly used) as the recessed portion described in the Claims. But in the second embodiment, a recessed portion 13f is formed separately from the groove portion 13a so that the recessed portion 13f is used only as the recessed portion. It is noted that the common components have the same numerals as the first embodiment and are omitted from the explanation.

In the second embodiment, the above-mentioned first through forth detecting portion disposing portion 13d1 through 13d4 and the first through third connecting portion disposing portion 13e1 through 13e3 are provided on the upper surface of the cushion member 13. The recessed portion 13f is formed in at least one of the first through third connecting portion disposing portion 13e1 through 13e3 (in the embodiment, the third connecting portion disposing portion). The first detecting portion disposing portion 13d1 and (/or) the second detecting portion disposing portion 13d2 and the third detecting portion disposing portion 13d3 and (/or) the forth detecting portion disposing portion 13d4 are disposed on the both sides of the recessed portion (the both sides putting the recessed portion 13f therebetween). The width of the recessed portion along a direction perpendicular to the longitudinal direction of the recessed portion 13f (direction along the pitch distance) is wider than the width of the connecting portion 40 which is disposed in the recessed portion (third connecting portion). It is preferable that the width of the recessed portion is determined considering the performance of sticking the load detection device 20 and the uncomfortable feeling of the occupant during seating. It is preferable that the recessed portion is not formed wider more than it has to be.

The load detection device 20 is stuck to the predetermined position of the upper surface of the cushion member 13 in a same manner as the above-mentioned first embodiment. That is, the first through forth detecting portions 31 through 34 are disposed on the first through forth detecting portion disposing portions 13d1 through 13d4. The first through third connecting portions 41 through 43 are disposed on the first through third connecting portion disposing portions 13e1 through 13e3. The third connecting portion 43 crossing over the recessed portion 13f is disposed in the recessed. In detail, as shown in Fig. 5 (c), in the recessed portion 13f, the portion 43a of the third connecting portion 43 is stuck to the inner surface of the recessed portion 13f.

Further, the length of the connecting portion disposed along the inner surface of the recessed portion 13f is so determined that the pitch distance between the two detecting portions disposed on both sides of the recessed portion 13f (in the embodiment, the first detecting portion 31 and the third detecting portion 33 (or the forth detecting portion 34), or the second detecting portion 32 and the forth detecting portion 34 (or the third detecting portion 33) becomes a predetermined value L when the third connecting portion 43 is disposed along the inner surface of the recessed portion 13f.

Thus, since the special recessed portion is formed, the two detecting portions 31 and 33 (or 32 and 34) can be disposed on both sides of the recessed portion 13f formed in the cushion member 13 even when there is no groove which can be utilized as the recessed portion, that is, the detecting portions 31 and 33 are disposed putting the recessed portion 13f therebetween. Thereby, with a simple structure that the recessed portion is formed in the cushion member 13, the pitch distance between the detecting portions 31 and 33 can be adjusted by utilizing the recessed portion 13f, that is, by disposing the third connecting portion 43 in the groove portion 13a. Therefore, if one kind of load detection device which is comparatively large in size (the pitch distance between the detecting portions being long) is prepared, the load detection device can be adaptable to a plurality of kinds of seat apparatuses (cushion members) by adjusting pitch distance between the detecting portions as mentioned before. Thereby, the common use of the load detection device can be accelerated, which can lead to a cost reduction.

### 3) THIRD EMBODIMENT

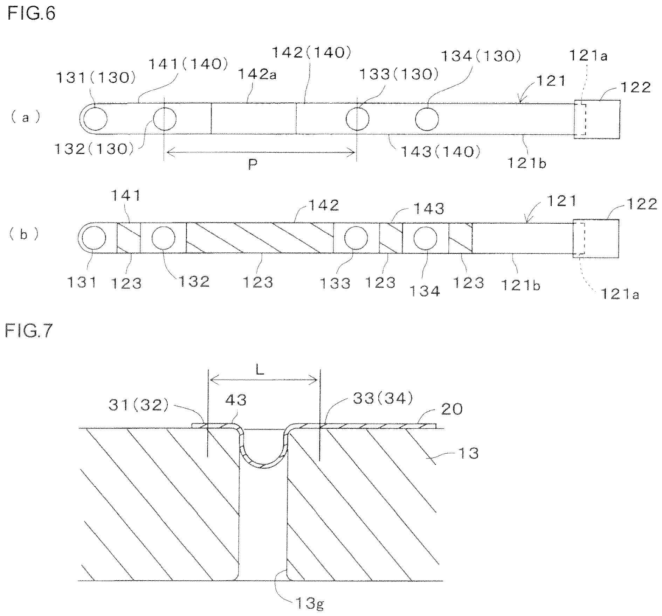

Hereinafter, a third embodiment will be explained with reference to Fig. 6. In each above-mentioned embodiment, the load detection device is formed to have an approximately T-shaped configuration which has one or more horizontally extended portions which are formed crossing the vertically extended portion below the top horizontally extended portion of T-shape. However, in the third embodiment, the load detection device is formed to have an I-shaped configuration as shown in Fig. 6.

In this case, the load detection device 120 comprises membrane switch 121 and connector 122 which are formed having film-shaped (or sheet-shaped) configuration. The membrane switch 121 comprises the detecting portions 130, the connecting portions 140 and output portion 121a.

The detecting portion 130 has the same structure as the above-mentioned detecting portion 30. There are provided a plurality of (four) detecting portions 130 in the embodiment. The detecting portions 130 are formed of a first through forth detecting portions 131 through 134. The connecting portion 140 has the same structure as the above-mentioned connecting portion 40. The connecting portions 140 are formed of a first connecting portion 141 for connecting the first detecting portion 131 and the second detecting portion 132, a second connecting portion 142 for connecting the second detecting portion 132 and the third detecting portion 133 and a third connecting portion 143 for connecting the third detecting portion 133 and the forth detecting portion 134. The second connecting portion 142 has a portion 142a (stuck portion) which is disposed in the groove portion 13a (recessed portion).

The output portion 121a outputs the load information detected by the detecting portions 30 in a same manner as the above-mentioned output portion 21a. The connector 122 is connected to the output portion 121a. The output portion 121a is connected to the connecting portion 121b connected to the forth detecting portion 134.

Further, as shown in Fig. 6 (b), a double-sided adhesive tape 123 (indicated with the hatched lines) is stuck to the back surface of the membrane switch 121. The double-sided adhesive tape 123 is not stuck to the back surface of the detecting portions 130, but is mainly stuck to the back surface of the connecting portions 140.

The load detection device 20 is adhered and fixed to the upper surface of the cushion member 13 at a predetermined location. That is, the first through forth detecting portions 131 through 134 are respectively disposed on the first through forth detecting portion disposing portions (not shown in the drawings). The first through third connecting portions 141 through 143 are respectively disposed on the first through third connecting portion disposing portions (not shown in the drawings). The second connecting portion 142 crossing over the groove portion 13a (recessed portion) is disposed in the groove portion 13a. In detail, a portion 142a of the second connecting portion 142 is adhered to the inner surface of the groove portion 13a in the groove portion 13a.

Also in this case, the length of the second connecting portion disposed along the inner surface of the recessed portion 13a is so determined that the pitch distance (after disposed) between the two detecting portions disposed on both sides of the recessed portion 13a (in the embodiment, the second detecting portion 132 and the third detecting portion 133) becomes a predetermined value L when the second connecting portion 42 is disposed along the inner surface of the recessed portion 13a. When the membrane switch 21 is in a plane plate state before being bent (refer to Fig. 6 (a)), the pitch distance (before being disposed) between the two detecting portions (in this embodiment, the second detecting portion 132 and the third detecting portion 133) disposed on both sides of the potion 142a is a length P. This length P is determined to be longer than the predetermined value L.

### 4) FORTH EMBODIMENT

Hereinafter, a forth embodiment will be explained with reference to Fig. 7. In the forth embodiment, a recessed portion formed in at least one of the connecting portion disposing portions, on both sides of which the detecting portion disposing portions are disposed, is an penetrating bore. In detail, as shown in Fig. 7, the penetrating bore 13g in stead of the recessed portion 13f in the second embodiment shown in Fig. 5 is formed penetrating through the cushion member 13 in a up/down direction (up/down direction in Fig. 7). It is noted that the same components as the second embodiment have the same numerals as the second embodiment and are omitted from the explanation.

Accordingly, under the condition that the detecting portions 30 are first disposed on the detecting portion disposing portions 13d and then the excess portion of the connecting portion is disposed in the penetrating bore 13g, the detecting portions 30 can be disposed on the predetermined detecting portion disposing portions without rising of the excess portion of the connecting portion from the surface of the cushion member 13. Thereby, as it is not necessary to restrict the shape of the recessed portion, the detecting portions 30 can be exactly disposed on the predetermined disposing portion with a simple structure and low cost.

It is noted that in the embodiments, the detecting portions 30 and 130 may be disposed on a lower surface instead of the upper surface of the cushion member 13 and also the recessed portion 13a and 13f may be disposed on the lower surface.

Further, the detecting portion 30 may be a type that can detect absolute load value as load information. The load detection device 20 is not limited to be a membrane switch formed having sheet-shaped configuration. It may be a detection device whose detecting portions are formed of another elements such as piezoelectric elements and are connected by connecting portions.

### INDUSTRIAL APPLICABILITY

As mentioned-above, in a mounting structure for mounting a load detection device, the pitch distance between the detecting portions is adjustable by utilizing a recessed portion formed in a member on which the load detection device is mounted so as to accelerate the common use of the load detection device, which can lead to a cost reduction.

### EXPLANATION OF REFERENCE NUMERALS

10: vehicle seat, 11: cushion member, 12: seat back, 13: seat cushion, 13a: groove portion (recessed portion), 13b: hook member, 13c: fixing member, 13d: detecting portion disposing portion, 13e: connecting portion disposing portion, 13f: recessed portion, 13g: penetrating bore, 14: skin surface, 20: load detection device, 21, 121: membrane switch, 21a, 121a: output portion, 22, 122: connector, 30: detecting portion, 31 through 34: first through forth detecting portion, 40: connecting portion, 41 through 43: first through third connecting portion.

## Claims

1. A seat cushion (11) of a vehicle seat (10) comprising a mounting structure for mounting a load detection device (20) to a cushion member (13) of the seat cushion (11), the seat cushion comprising:
the load detection device (20) comprises a plurality of detecting portions (30) for detecting load information and one or more connecting portions (40) for connecting the detecting portions (30);
the cushion member (13) includes a plurality of detecting portion disposing portions (13d) for disposing the detecting portions (30), respectively, one or more connecting portion disposing portions (13e) for disposing the one or more connecting portions (40), respectively, and a recessed portion (13a) formed in only one connection portion disposing portion (13e3) of the connecting portion disposing portions (13e), both sides of the recessed portion (13a) being arranged with the detecting portion disposing portions (13d);
the recessed portion (13a) is a groove formed as a decorative groove of the seat cushion (11) or a suspending groove for suspending a surface skin member of the seat cushion (11);
the load detection device (20) is mounted on the cushion member (13) in such a manner that the respective detecting portions (30) are disposed on the respective detecting portion disposing portions (13d), the one or more connecting portions (40) are disposed on the connecting portion disposing portions (13e), and only one connecting portion (43) of the connecting portions (40) is disposed in said only one connection portion disposing portion (13e3) of the connecting portion disposing portions (13e), said only one connecting portion (43) of the connecting portions (40) crossing over the recessed portion (13a) and being disposed in the recessed portion (13a), so that a pitch distance between the detecting portions connected by said only one connecting portion (43) of the connecting portions (40) can be adjusted by utilizing the recessed portion (13a);
a double-sided adhesive tape (23) is stuck to the back surface of all the connecting portions (40) and the double-sided adhesive tape (23) is not stuck to the back surface of the detecting portions (30), and
all the connecting portions (40) are adhered and fixed on the upper surface of the cushion member (13) by means of the double-sided adhesive tape (23).

2. The seat cushion (11) according to Claim 1, wherein
the length of the connecting portion (43) disposed along the inner surface of the recessed portion (13a) is so determined that the pitch distance between the two detecting portions (30) disposed on both sides of the recessed portion (13a) becomes a predetermined value when the connecting portion (43) is disposed along the inner surface of the recessed portion (13a).

3. The seat cushion (11) according to Claim 1 or Claim 2, wherein only the back surface of the connecting portions (43a) is adhered to the recessed portion (13a) by means of the double-sided adhesive tape (23), only one connecting portion (43) has a portion (43a) which is disposed in the recessed portion (13a), and only the back surface of the portion (43a) is adhered to the recessed portion (13a) by means of the double-adhesive tape (23).

4. A method for mounting a load detection device (20) comprising a plurality of detecting portions (30) for detecting load information and one or more connecting portions (40) for connecting the detecting portions (30), to a cushion member (13) of a seat cushion (11) of a vehicle seat (10), which includes a plurality of detecting portion disposing portions (13d) for disposing the detecting portions (30), respectively, one or more connecting portion disposing portions (13e) for disposing the one or more connecting portions (40), respectively, and a recessed portion (13a) formed in only one connecting portion disposing portions (13e3) of the connecting portion disposing portions (13e), both sides of the recessed portion (13a) being arranged with the detecting portion disposing portions (13d), and being a groove formed as a decorative groove of the seat cushion (11) or a suspending groove for suspending a surface skin member of the seat cushion (11), wherein
in a process for disposing the one or more connecting portions (40) on the connecting portion disposing portions (13e), only one connecting portion (43) of the connecting portions (40) crossing over the recessed portion (13a) is disposed in the recessed portion (13a) when said only one connecting portion (43) of the connecting portions (40) is disposed on said only one connecting portion disposing portion (13e) of the connecting portion disposing portions (13e) provided with the recessed portion (13a), so that a pitch distance between the detecting portions connected by said only one connecting portion (43) of the connecting portions (40) can be adjusted by utilizing the recessed portion (13a),
a double-sided adhesive tape (23) is stuck to the back surface of all the connecting portions (40) and the double-sided adhesive tape (23) is not stuck to the back surface of the detecting portions (30), and
all the connecting portions (40) are adhered and fixed on the upper surface of the cushion member (13) by means of the double-sided adhesive tape (23).

5. A method for mounting a load detection device (20) according to Claim 4, wherein only the back surface of the connecting portions (43) is adhered to the recessed portion (13a) by means of the double-sided adhesive tape (23), only one connecting portion (43) has a portion (43a) which is disposed in the recessed portion (13a), and only the back surface of the portion (43a) is adhered to the recessed portion (13a) by means of the double-adhesive tape (23).

## Patentansprüche

1. Sitzpolster (11) eines Fahrzeugsitzes (10) mit einer Befestigungsstruktur zum Befestigen einer Lasterfassungsvorrichtung (20) an einem Polsterelement (13) des Sitzpolsters (11), wobei das Sitzpolster umfasst:
die Lasterfassungsvorrichtung (20), die eine Vielzahl von Erfassungsabschnitten (30) zum Erfassen von Lastinformationen und einen oder mehrere Verbindungsabschnitte (40) zum Verbinden der Erfassungsabschnitte (30) umfasst,
das Polsterelement (13), das eine Vielzahl von Erfassungsabschnitt-Anordnungsabschnitten (13d) zum Anordnen der Erfassungsabschnitte (30), einen oder mehrere Verbindungsabschnitt-Anordnungsabschnitte (13e) zum Anordnen des einen oder der mehreren Verbindungsabschnitte (40) und einen zurückspringenden Abschnitt (13a) aufweist, der in nur einem Verbindungsabschnitt-Anordnungsabschnitt (13e3) der Verbindungsabschnitt-Anordnungsabschnitte (13e) ausgebildet ist, wobei beide Seiten des zurückspringenden Abschnitts (13a) mit den Erfassungsabschnitt-Anordnungsabschnitten (13d) angeordnet sind, wobei
der zurückspringende Abschnitt (13a) eine Nut ist, die als eine dekorative Nut des Sitzpolsters (11) oder eine Aufhängungsnut zum Aufhängen eines Oberflächenhautteils des Sitzpolsters (11) ausgebildet ist,
die Lasterfassungsvorrichtung (20) an dem Polsterelement (13) derart angebracht ist, dass die jeweiligen Erfassungsabschnitte (30) an den jeweiligen Erfassungsabschnitts-Anordnungsabschnitten (13d) angeordnet sind, der eine oder die mehreren Verbindungsabschnitte (40) an den Verbindungsabschnitts-Anordnungsabschnitten (13e) angeordnet sind, und nur ein Verbindungsabschnitt (43) der Verbindungsabschnitte (40) in dem nur einen Verbindungsabschnitts-Anordnungsabschnitt (13e3) der Verbindungsabschnitts-Anordnungsabschnitte (13e) angeordnet ist, wobei der nur eine Verbindungsabschnitt (43) der Verbindungsabschnitte (40) den zurückspringenden Abschnitt (13a) überquert und in dem zurückspringenden Abschnitt (13a) angeordnet ist, so dass ein Teilungsabstand zwischen den Erfassungsabschnitten, die durch den nur einen Verbindungsabschnitt (43) der Verbindungsabschnitte (40) verbunden sind, unter Verwendung des ausgesparten Abschnitts (13a) eingestellt werden kann,
ein doppelseitiges Klebeband (23) auf die Rückseite aller Verbindungsabschnitte (40) geklebt ist und das doppelseitige Klebeband (23) nicht auf die Rückseite der Erfassungsabschnitte (30) geklebt ist, und
alle Verbindungsteile (40) auf der Oberseite des Polsterelements (13) mittels des doppelseitigen Klebebandes (23) aufgeklebt und fixiert sind.

2. Sitzpolster (11) nach Anspruch 1, wobei
die Länge des Verbindungsabschnitts (43), der entlang der Innenfläche des zurückspringenden Abschnitts (13a) angeordnet ist, so bestimmt ist, dass der Teilungsabstand zwischen den beiden Erfassungsabschnitten (30), die auf beiden Seiten des ausgesparten Abschnitts (13a) angeordnet sind, einen vorbestimmten Wert annimmt, wenn der Verbindungsabschnitt (43) entlang der Innenfläche des ausgesparten Abschnitts (13a) angeordnet ist.

3. Sitzpolster (11) nach Anspruch 1 oder Anspruch 2, wobei nur die Rückfläche der Verbindungsabschnitte (43a) mittels des doppelseitigen Klebebandes (23) an den zurückspringenden Abschnitt (13a) geklebt ist, nur ein Verbindungsabschnitt (43) einen Abschnitt (43a) aufweist, der in dem zurückspringenden Abschnitt (13a) angeordnet ist, und nur die Rückfläche des Abschnitts (43a) mittels des doppelseitigen Klebebandes (23) an den zurückspringenden Abschnitt (13a) geklebt ist.

4. Verfahren zum Befestigen einer Lasterfassungsvorrichtung (20), die eine Vielzahl von Erfassungsabschnitten (30) zum Erfassen von Lastinformationen und einen oder mehrere Verbindungsabschnitte (40) zum Verbinden der Erfassungsabschnitte (30) mit einem Polsterelement (13) eines Sitzpolsters (11) eines Fahrzeugsitzes (10), der eine Vielzahl von Erfassungsabschnitt-Anordnungsabschnitten (13d) zum Anordnen der Erfassungsabschnitte (30) bzw. einen oder mehrere Verbindungsabschnitt-Anordnungsabschnitte (13e) zum Anordnen des einen oder der mehreren Verbindungsabschnitte (40) und einen zurückspringenden Abschnitt (13a) aufweist, der in nur einem Verbindungsabschnitts-Anordnungsabschnitt (13e3) der Verbindungsabschnitts-Anordnungsabschnitte (13e) ausgebildet ist, wobei beide Seiten des zurückspringenden Abschnitts (13a) mit den Erfassungsabschnitts-Anordnungsabschnitten (13d) angeordnet sind, und der eine Nut ist, die als eine dekorative Nut des Sitzkissens (11) oder als eine Aufhängungsnut zum Aufhängen eines Oberflächenhautelements des Sitzkissens (11) ausgebildet ist, wobei
in einem Verfahren zum Anordnen des einen oder der mehreren Verbindungsabschnitte (40) auf den Verbindungsabschnitts-Anordnungsabschnitten (13e), nur ein Verbindungsabschnitt (43) der Verbindungsabschnitte (40), der den zurückspringenden Abschnitt (13a) überquert, in dem zurückspringenden Abschnitt (13a) angeordnet ist, wenn der nur eine Verbindungsabschnitt (43) der Verbindungsabschnitte (40) auf dem nur einen Verbindungsabschnitts-Anordnungsabschnitt (13e) der Verbindungsabschnitts-Anordnungsabschnitte (13e) angeordnet ist, der mit dem zurückspringenden Abschnitt (13a) versehen ist, so dass ein Teilungsabstand zwischen den Erfassungsabschnitten, die durch den nur einen Verbindungsabschnitt (43) der Verbindungsabschnitte (40) verbunden sind, unter Verwendung des zurückspringenden Abschnitts (13a) eingestellt werden kann,
ein doppelseitiges Klebeband (23) auf die Rückseite aller Verbindungsabschnitte (40) geklebt ist und das doppelseitige Klebeband (23) nicht auf die Rückseite der Erfassungsabschnitte (30) geklebt ist, und
alle Verbindungsabschnitte (40) auf der Oberseite des Polsterelements (13) mittels des doppelseitigen Klebebandes (23) aufgeklebt und fixiert sind.

5. Verfahren zur Befestigung einer Lasterfassungsvorrichtung (20) nach Anspruch 4, wobei nur die Rückseite der Verbindungsabschnitte (43) mittels des doppelseitigen Klebebandes (23) an den zurückspringenden Abschnitt (13a) geklebt wird, nur ein Verbindungsabschnitt (43) einen Abschnitt (43a) aufweist, der in dem zurückspringenden Abschnitt (13a) angeordnet ist, und nur die Rückseite des Abschnitts (43a) mittels des doppelseitigen Klebebandes (23) an den zurückspringenden Abschnitt (13a) geklebt wird.

## Revendications

1. Coussin de siège (11) d'un siège de véhicule (10) comprenant une structure de montage pour monter un dispositif de détection de charge (20) sur un élément de coussin (13) du coussin de siège (11), le coussin de siège comprenant :
le dispositif de détection de charge (20) qui comprend une pluralité de parties de détection (30) pour détecter l'information de charge et une ou plusieurs parties de raccordement (40) pour raccorder les parties de détection (30) ;
l'élément de coussin (13) qui comprend une pluralité de parties de disposition de partie de détection (13d) pour disposer les parties de détection (30) respectivement, une ou plusieurs parties de disposition de partie de raccordement (13e) pour disposer les une ou plusieurs parties de raccordement (40) respectivement, et une partie évidée (13a) formée dans une seule partie de disposition de partie de raccordement (13e3) des parties de disposition de partie de raccordement (13e), les deux côtés de la partie évidée (13a) étant agencés avec les parties de disposition de partie de détection (13d) ;
la partie évidée (13a) qui est une rainure formée comme une rainure décorative du coussin de siège (11) ou une rainure de suspension pour suspendre un élément de revêtement de surface du coussin de siège (11) ;
le dispositif de détection de charge (20) qui est monté sur l'élément de coussin (13) de sorte que les parties de détection (30) respectives sont disposées sur les parties de disposition de partie de détection (13a) respectives, les une ou plusieurs parties de raccordement (40) sont disposées sur les parties de disposition de partie de raccordement (13e), et une seule partie de raccordement (43) des parties de raccordement (40) est disposée dans ladite une seule partie de disposition de partie de raccordement (13e3) des parties de disposition de partie de raccordement (13e), ladite seule partie de raccordement (43) des parties de raccordement (40) traversant la partie évidée (13a) et étant disposée dans la partie évidée (13a), de sorte qu'une distance d'écartement entre les parties de détection raccordées par ladite seule partie de raccordement (43) des parties de raccordement (40) peut être ajustée en utilisant la partie évidée (13a) ;
une bande adhésive double face (23) qui est collée sur la face arrière de toutes les parties de raccordement (40) et la bande adhésive double face (23) n'est pas collée sur la surface arrière des parties de détection (30), et
toutes les parties de raccordement (40) sont collées et fixées sur la surface supérieure de l'élément de coussin (13) au moyen de la bande adhésive double face (23).

2. Coussin de siège (11) selon la revendication 1, dans lequel :
la longueur de la partie de raccordement (43) disposée le long de la surface interne de la partie évidée (13a) est déterminée de sorte que la distance d'écartement entre les deux parties de détection (30) disposées des deux côtés de la partie évidée (13a) devient une valeur prédéterminée lorsque la partie de raccordement (43) est disposée le long de la surface interne de la partie évidée (13a).

3. Coussin de siège (11) selon la revendication 1 ou la revendication 2, dans lequel seule la surface arrière des parties de raccordement (43a) est collée sur la partie évidée (13a) au moyen de la bande adhésive double face (23), une seule partie de raccordement (43) a une partie (43a) qui est disposée dans la partie évidée (13a), et seule la surface arrière de la partie (43a) est collée sur la partie évidée (13a) au moyen de la bande adhésive double face (23).

4. Procédé pour monter un dispositif de détection de charge (20) comprenant une pluralité de parties de détection (30) pour détecter l'information de charge et une ou plusieurs parties de raccordement (40) pour raccorder les parties de détection (30), à un élément de coussin (13) d'un coussin de siège (11) d'un siège d'un véhicule (10), qui comprend une pluralité de parties de disposition de partie de détection (13d) pour disposer les parties de détection (30) respectivement, une ou plusieurs parties de disposition de partie de raccordement (13e) pour disposer les une ou plusieurs parties de raccordement (40), respectivement, et une partie évidée (13a) formée dans une seule des parties de disposition de partie de raccordement (13e3) des parties de disposition de partie de raccordement (13e), les deux côtés de la partie évidée (13a) étant agencés avec les parties de disposition de partie de détection (13d), et étant une rainure formée comme une rainure décorative du coussin de siège (11) ou une rainure de suspension pour suspendre un élément de revêtement de surface du coussin de siège (11), dans lequel :
dans un procédé pour disposer les une ou plusieurs parties de raccordement (40) sur les parties de disposition de partie de raccordement (13e), une seule partie de raccordement (43) des parties de raccordement (40) traversant la partie évidée (13a) est disposée dans la partie évidée (13a) lorsque ladite une seule partie de raccordement (43) des parties de raccordement (40) est disposée sur ladite une seule partie de disposition de partie de raccordement (13e) des parties de disposition de partie de raccordement (13e) prévues dans la partie d'évidement (13a), de sorte qu'une distance d'écartement entre les parties de détection raccordées par ladite une seule partie de raccordement (43) des parties de raccordement (40) peut être ajustée en utilisant la partie évidée (13a),
une bande adhésive double face (23) est collée sur la surface arrière de toutes les parties de raccordement (40) et la bande adhésive double face (23) n'est pas collée à la surface arrière des parties de détection (30), et
toutes les parties de raccordement (40) sont collées et fixées sur la surface supérieure de l'élément de coussin (13) au moyen de la bande adhésive double face (23).

5. Procédé pour monter un dispositif de détection de charge (20) selon la revendication 4, dans lequel seule la surface arrière des parties de raccordement (43) est collée à la partie évidée (13a) au moyen de la bande adhésive double face (23), une seule partie de raccordement (43) a une partie (43a) qui est disposée dans la partie évidée (13a), et seule la surface arrière de la partie (43a) est collée sur la partie évidée (13a) au moyen de la bande adhésive double face (23).
